# EUROPEAN PATENT SPECIFICATION

(11) **EP 0 535 066 B1**
(45) Date of publication and mention of the grant of the patent: **27.12.1996**
(21) Application number: 91911329.0
(22) Date of filing: 19.06.1991
(51) Int. Cl.: H04N 5/14

(54) **VIDEO SIGNAL PROCESSING**
VIDEOSIGNALVERARBEITUNG
TRAITEMENT DE SIGNAUX VIDEO

(30) Priority: 19.06.1990 GB 9013642
(43) Date of publication of application: 07.04.1993
(73) Proprietor: BRITISH BROADCASTING CORPORATION, London W1A 1AA (GB)
(72) Inventor: BORER, Timothy, John, Tadworth, Surrey KT20 6NP (GB)
(74) Representative: Garratt, Peter Douglas
(86) International application number: GB9100982
(87) International publication number: WO9120155

(56) References cited:
- SIGNAL PROCESSING. vol. 15, no. 3, October 1988, AMSTERDAM NL pages 315 - 334; M.HOTTER ET AL: 'IMAGE SEGMENTATION BASED ON OBJECT ORIENTED MAPPING PARAMETER ESTIMATION '
- BBC RESEARCH DEPARTMENT REPORT. no. 11, September 1987, TADWORTH GB pages 1 - 20; G.A.THOMAS ET AL: 'TELEVISION MOTION MEASUREMENT FOR DATV AND OTHER APPLICATIONS '

## Description

### Background of the Invention

This invention relates to video signal processing.

It is known from BBC Research Department Report No. RD 1987/11 published by British Broadcasting Corporation, Research Department, Engineering Division, and from United Kingdom Patent Specification No. GB-A-2,188,510, to make an estimate of the apparent movement in various parts of a video image from one frame to the next. The movement is measured as a vector, i.e. defining direction and magnitude of movement. This motion vector estimation can advantageously be used in motion-compensated standards conversion (e.g. between 50 and 60 Hz field rates), or in other motion-compensated image processing applications such as slow motion display, film motion portrayal improvement, field rate upconversion, video noise reduction, PAL decoding, bandwidth reduction and dirt reduction, for example.

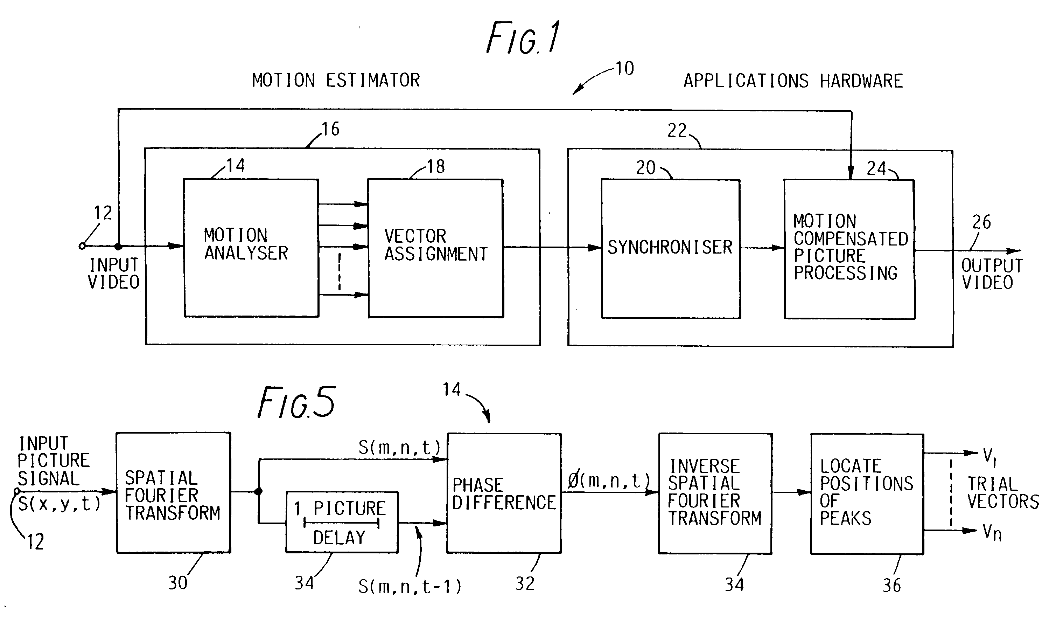

Figure 1 of the accompanying drawings illustrates in outline the basic structure of a motion-compensated video processing system 10. An input 12 receives a video signal at a field or picture rate of fi Hz and this is applied to a motion analyser 14 in a motion estimator 16. The motion estimator also includes a vector assignment circuit 18 connected to receive a "menu" of possible motion vectors from the motion analyser. The motion vectors are applied to a synchroniser 20 in the applications hardware 22, which also includes the desired motion-compensated picture processing circuitry 24. The circuitry 24 receives both the input signal from input 12 and the output of the synchroniser 22, and provides an output at the output field or picture rate fo Hz to an output terminal 26.

In this system, the motion analyser derives, for each pixel, a menu of possible motion vectors (trial vectors) which may apply to that pixel. This may be done using the phase correlation technique described in the above-mentioned references, or otherwise. The vector assignment stage then assigns one of the possible motion vectors to each pixel, or indicates that none is appropriate.

The above references give an algorithm for vector assignment. This involves shifting the next succeeding picture by each trial vector and comparing the shifted pictures to the input picture. The vector which gives the best match, in a small region around the pixel, is assignment to that pixel. If no trial vector gives a good match a 'no match' flag is set as that pixel's 'vector'.

We have found that with such a system an unexpected problem can arise. The resultant video picture, after being subjected to motion-compensated standards conversion, can have an objectionable 'halo' behind moving objects.

This halo effect is caused by moving objects covering and uncovering background in the image.

It is proposed in SIGNAL PROCESSING vol 15, No. 3 October 1988 pages 315-334 that both forward and backward assignment be used to detect such covered and uncovered regions using forward and backward assignment of vectors.

### Summary of the Invention

We have appreciated that this 'halo' arises because an inappropriate vector is being used in the region of the trailing edge of objects. These are areas which constitute revealed background. The effect does not occur at the leading edge of an object; this region correctly being flagged as "no match".

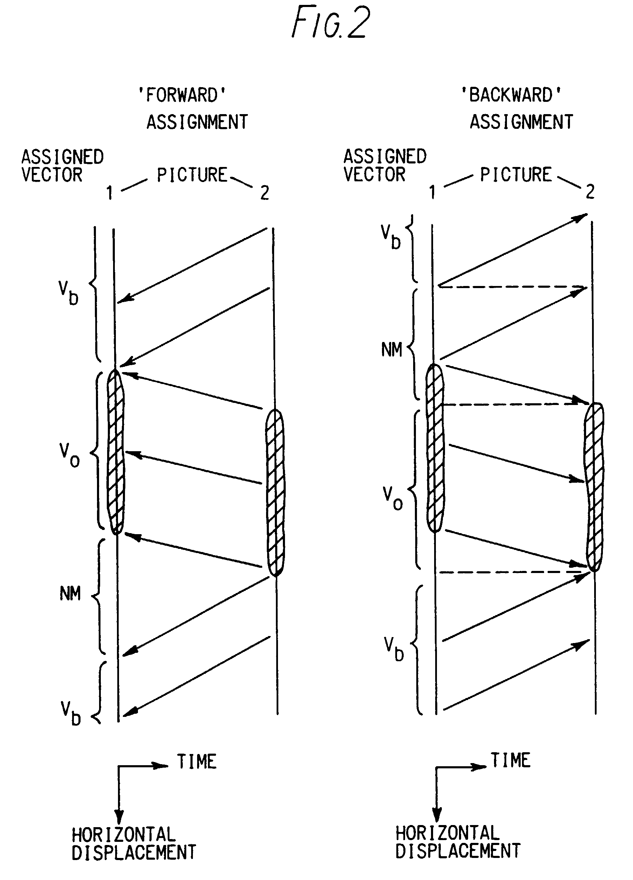

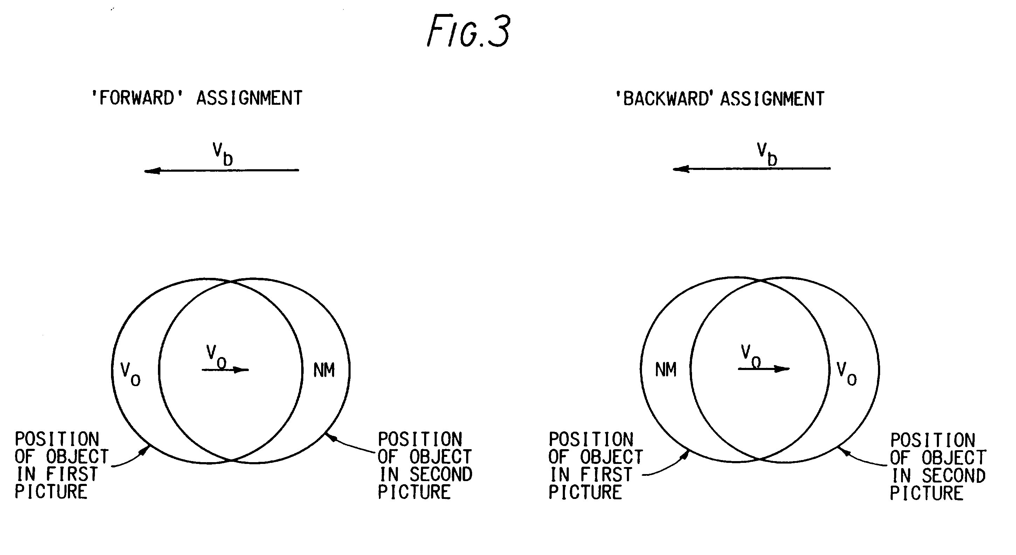

It will be apparent that the motion assignment method described in the above-mentioned references may be characterised as "forward assignment". This is illustrated in the left-hand side of each of Figures 2 and 3 of the accompanying drawings. In forward assignment, when there is movement of an object between a first position in a first frame and a second position in the second frame, the motion vector will be associated with the whole of the first position of the object, whereas it should only be associated with the area over which the first and second positions overlap. The region of the first position which is not overlapped by the second position, which his a region of revealed background, should be identified as 'no match'. In Figures 2 and 3, Vₒ represents the velocity of the foreground object, V_{b} the velocity of the background, and NM no match regions to which no vector is assigned.

Thus, generally stated, forward vector assignment is valid only for extrapolating a picture forward in time. We have appreciated that there are many occasions where this is inappropriate.

In accordance with this invention we propose additionally to extrapolate the picture backwards in time, by what we may term backwards assignment. This is achieved by using the same methods as in forward assignment, as described in the above references, but with the roles of the "current" and "succeeding" pictures reversed.

In this process the current picture is shifted by each of the trial vectors and compared to the succeeding picture. As before, the vector assigned to a pixel corresponds to the trial vector which gives the best match in a small region around that pixel. Backward assignment is illustrated in the right-hand part of each of Figures 2 and 3.

Backward assignment is valid for extrapolating a picture backwards (but not forwards) in time. If backward assigned vectors are used for motion compensation, as described above, an objectionable halo is generated in front of the leading edge of an object (but not behind). The reason for this is completely analogous to that for forward assignment described above.

In instances where it is desired to accommodate both obscured and revealed background, neither forward nor backward assignment will therefore be entirely satisfactory on their own. Improved vector assignment can thus be accomplished by combining forward and backward assignment processes to give the best features of each. This can be achieved by attempting to assign each trial vector using both forward and backward assignment in parallel. The disparity between shifted and stationary pictures in both assignment processes can be combined to give a composite measure of disparity. The disparity between shifted and stationary pictures can be measured as the local mean absolute difference between the pictures, as described in the above references. Alternatively the local root mean square difference between the pictures might be used. In either case these measures of disparity can simply be added, for forward and backward assignment, to give a combined measure of disparity. As before, the trial vector which gives the lowest composite disparity would be assigned to each pixel (providing the disparity was small).

Combined vector assignment flags regions of both revealed and obscured background as 'no match' so that a fallback interpolation technique can be used. In these regions of revealed and obscured background either forward or backward assignment (but not both) will give a large disparity. Hence the composite disparity should be large and the region flagged as 'no match'. It is important that if either forward or backward assignment has a large disparity the affected picture region be flagged 'no match'. For this reason it may be best to form the combined disparity as the root mean square disparity of forward and backward assignment, rather than simply their sum.

Regions for which forward and backward assignment give one large and one small disparity can be classified as revealed or obscured background depending on which assignment process gives the larger disparity.

Flagging regions of both revealed and obscured background allows improved motion compensated processing compared to using either forward or backward assignment on their own. A simple synchroniser can be used to produce a vector field co-timed with application hardware output pictures (Figure 1). The synchroniser generates an output picture sequence at a different picture rate to that of its input sequence. This is done by repeating the most recent input picture at each required output instant. As all problem regions of the picture are flagged, no objectionable halo effects need be produced, as would happen using either forward or backward assignment alone.

### Brief Description of the Drawings

The invention will now be described in more detail by way of example and with reference to the drawings in which:-
**Figure 1** (referred to above) is a block diagram of a motion-compensated video processing system;
**Figure 2** (referred to above) is a horizontal/temporal diagram illustrating the forward assignment and backward assignment processes;
**Figure 3** (referred to above) is a horizontal/vertical view of the forward assignment and backward assignment processes;
**Figure 4** illustrates assignment operations relative to an output field mid-way between two input fields, showing at (a) a horizontal/temporal view and at (b) a horizontal/vertical view;
**Figure 5** is a block circuit diagram of a motion analyser using phase correlation;
**Figure 6** is a block circuit diagram of a vector assignment system;
**Figure 7** is a block circuit diagram of one vector assignment unit in the vector assignment system of Figure 6; and
**Figure 8** is a horizontal/temporal view illustrating the forward projection of vectors in time in another method of picture rate conversion.

### Detailed Description of the Preferred Embodiment

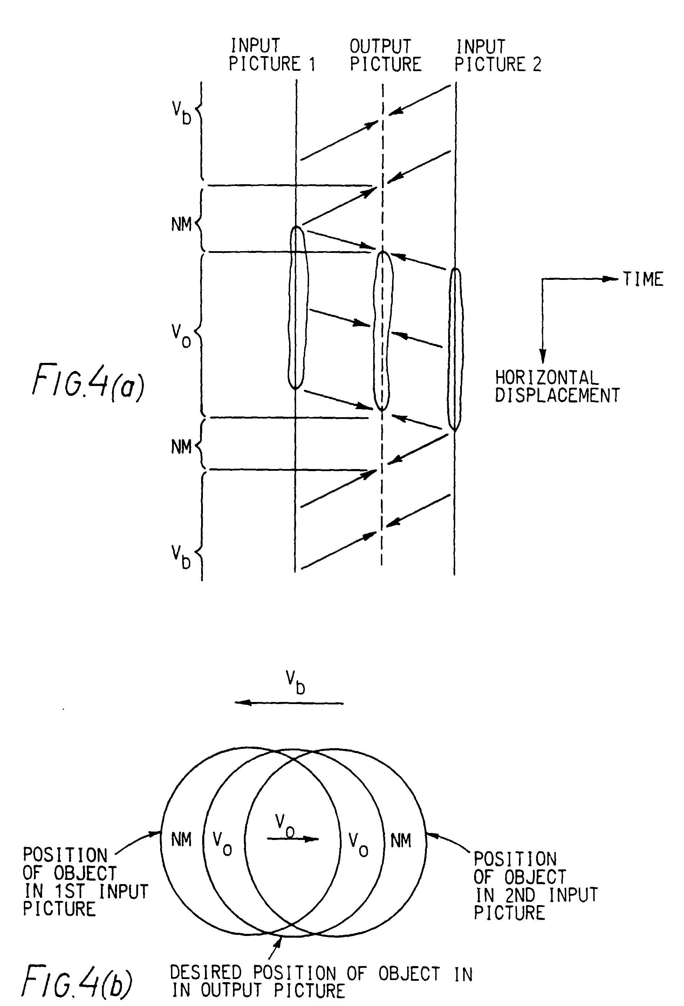

Figure 4 of the accompanying drawings illustrates a combined assignment system, in which both forward and backward assignment is employed. Two input pictures, namely input picture 1 and input picture 2, are compared with each other.

In Figure 4(b) the velocity of the foreground object is again shown as Vₒ and the velocity of the background as V_{b}. Forward and backwards assignment is used to determine a "template" applicable to the interval between input picture 1 and input picture 2 of regions which are regarded as moving with the object vector Vₒ, regions which are moving with the background vector V_{b}, and regions which may contain revealed or obscrued background. This template can then be used to predict any desired output picture intermediate the input pictures by extrapolating from one of the two input pictures using the motion vectors in a proportion related to the timing of the output picture relative to the two input pictures. The template will not be optimum for any given output field, as shown, because it flags as "no match" regions of the picture which would correspond to revealed or obscured background at any output picture location between the two input pictures.

Combined assignment should reduce the problems associated with trying to estimate motion from an interlaced television source. Problems arise, using forward (or backward) assignment with interlaced pictures, on vertical edges (e.g. horizontal straight lines). This is because each field is (vertically) subsampled resulting in confusion between vertical motion and detail. Shifting a single field results in aliasing in the shifted picture. This aliasing gives rise to errors in the measured disparity between the shifted and reference pictures. In combined assignment, both the current picture and its successor are shifted (in opposite directions). Vertical aliasing will give rise to different errors in the measured disparity for forward and backward assignment. On average these errors will tend to offset each other. For example, if forward assignment gives an erroneously low disparity this is likely to be offset by an erroneously high disparity from backward assignment. Combined assignment should therefore give more reliable results when assigning vectors to interlaced pictures.

Thus, in summary, the preferred vector assignment process assigns a motion vector, selected from a menu of possible vectors, to each pixel in an image individually. The menu of vectors can be derived from phase correlation or otherwise. If no menu is available all possible motion vectors could be tried (an exhaustive search). In this case the proposed vector assignment itself constitutes a motion estimation system. However, this approach would be computationally very inefficient.

The vector assignment process described above has a number of advantageous features, including:
1) Motion vectors are assigned to pixels in an input picture. This is done such that the assigned vector can be used to interpolate a new picture at any time between the input picture and its immediate successor. This implies that a simple synchroniser can be used to convert motion vectors from an input picture rate to a different output picture rate for a specific application. This is useful in situations where motion compensated processing is used to produce pictures at an output rate which is different from the input rate.
2) Pixels for which no vector, as described above, can be assigned are clearly identified. This allows an alternative (fallback) interpolation technique to be used by the application hardware for these pixels.
3) Pixels for which no vector can be assigned can be divided into those corresponding to revealed or to obscured background. This may assist interpolation by the applications hardware, and produce improved performance.
4) The vectors assigned are robust to the detrimental effects (for motion estimation) of interlace scanned television pictures, and of noise.

### Implementation

Figure 1 shows that a motion estimator may comprise of two parts, a motion analyser 14 and vector assignment system 18. The motion analyser may in principle be dispensed with and a menu of all possible vectors tried instead. This is an exhaustive search and is very inefficient.

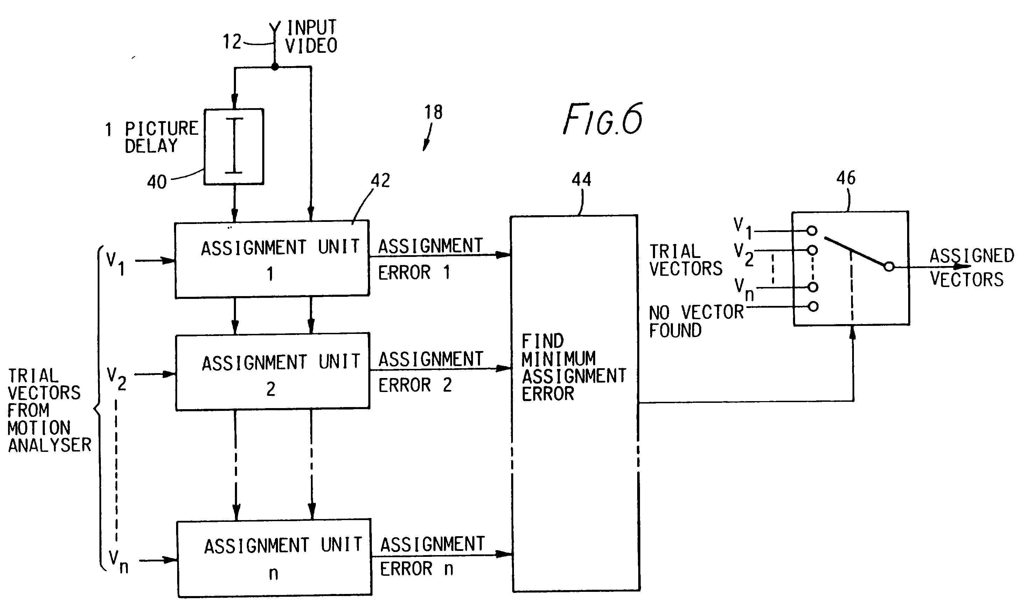

An efficient motion estimator requires a motion analyser. This takes the input video and generates a small number (typically 8) of plausible motions (known as trial vectors) for each part of the picture. A system to achieve this is shown in Figure 5 and described in the above references. The technique shown is known as phase correlation. Alternative motion analysis techniques are available which could be used with this invention (see for example SPIE, Vol. 1153, Applications of Digital Image Processing XIII (1989) pages 193 to 202; Lee D.J., Mitra S. and Krile T.F. "A hybrid registration and analysis technique for sequential complex images").

Briefly, the phase correlation based motion analyser 14 receives the input picture signal and subjects this to a spatial Fourier transform in a circuit 30. The output of this provides a representation of the spatial spectrum of the input television picture. A phase difference circuit 32 generates the phase difference between the output of transform circuit 30 both direct and after a one-picture delay 34. This phase difference function is applied to an inverse spatial Fourier transform circuit 36, which provides an output representing a "correlation surface". A circuit 38 locates the positions of peaks in this surface to provide a menu of possible motion vectors. For further details reference should be made to the above-mentioned BBC Report RD 1987/11 and U.K. Patent Specification 2,188,510.

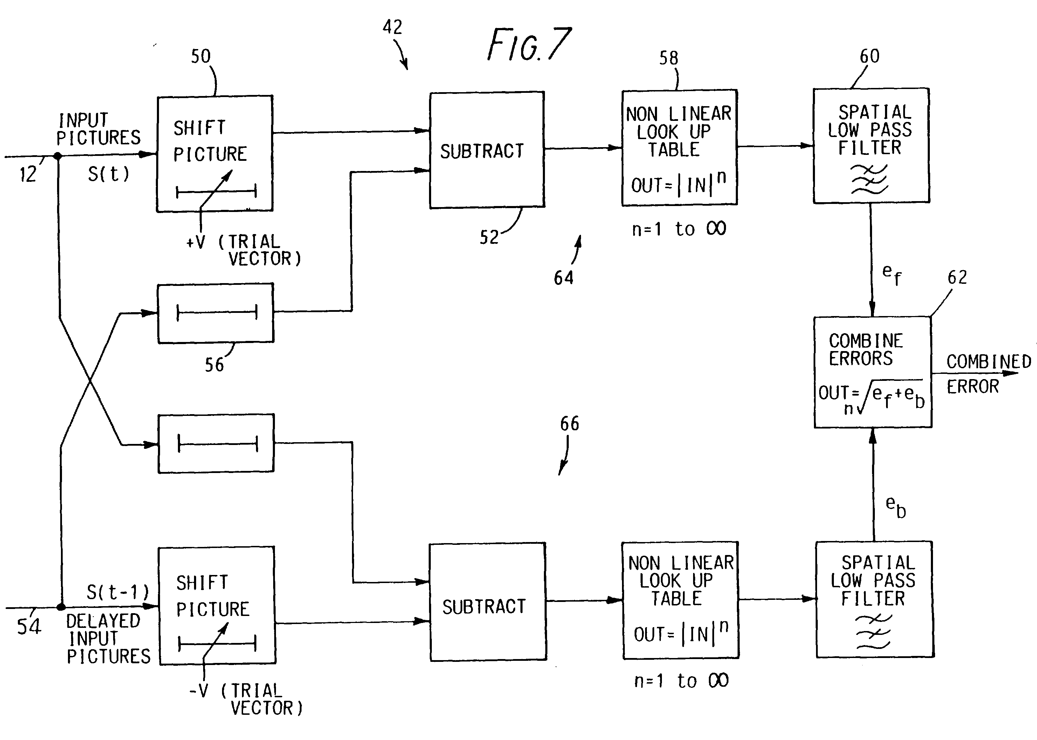

The function of the vector assignment system 18 in Figure 1, is to determine which (if any) of the trial vectors applies to each individual pixel in the input picture. This is done by assessing how well shifted versions of the picture match to both earlier (forward assignment) or later (backward assignment) pictures in the sequence. A block diagram of vector assignment is given in Figure 6 with further detail in Figure 7. The vector assignment system 18 of Figure 6 receives the input video 12 direct and via a one-picture delay 40, and also receives the trial vectors V₁...Vₙ from the motion analyser 14. Associated with each trial vector is a respective one of n assignment units 42 which each produce an assignment error. This is applied to a circuit 44 designed to find the minimum assignment error and determine which of the vectors this applies to. If all the assignment errors are large, a "no match" situation is assumed. The output of the circuit 44 is thus the number of the assignment unit giving the smallest error, or a value indicating that no match was found. This is applied to a selector 46 which selects the corresponding vector as the assigned vector, for use in the subsequent applications hardware, e.g. for standards conversion.

Thus the match between the current and a delayed version of the input picture sequence is determined in the assignment units 42. The assignment unit which gives the best match is determined and used to select which of the trial vectors is deemed appropriate for a given pixel. If none of the trial vectors give a good match then 'no vector found' is signalled rather than one of the trial vectors.

The assignment units are shown in detail in Figure 7, in which the top half 64 of the diagram represents forward assignment while the bottom half 66 represents backward assignment. The errors from each type of assignment are combined as the last stage in the assignment unit.

Referring to Figure 7, the forward assignment section 64 of the assignment unit receives the input video and shifts this by the trial vector associated with that assignment unit in a circuit 50. A subtractor 52 receives the shifted signal and subtracts from this the delayed input picture received at an input 54 after delay in one-picture delay 40. A compensating delay 56 compensates for the delay introduced in circuit 50. The output of the subtractor 52 is applied to a non-linear look-up table 58 which provides an output which is the modulus of the input taken to the power n where n is at least unity and may typically be two, as noted above. In any given apparatus n may be regarded as fixed. The resultant is applied to a spatial low-pass filter 60 and then to one input of a combining circuit 62 the output of which is the square root of the sum of the inputs thereto. This provides a root-mean-square function. The backwards assignment section 66 of the unit 42 is the same and provides the other input to the combining circuit 62.

### Alternative method of picture rate conversion for motion vectors

The motion vectors derived as described above can easily be converted to a different picture rate using a synchroniser. That is to generate a field of motion vectors for a given instant in time the latest available input field of motion vectors is used. This process is easy to implement in hardware and is the principle advantage of this invention.

An alternative method for changing the picture rate of motion vectors has been proposed, see Proceedings of the Second International Workshop on Signal Processing of HDTV, L'Aquila, Italy, 1988 edited by L. Chiariglione, pub. Elsevier Science Publishers B.V., ISBN 0-444-70518-X; see particularly Section 4 of Motion Compensated Display Conversion by Fernando G.M.X. and Parker D.W. This will be briefly described to show the problems of the method and highlight the advantages of this invention.

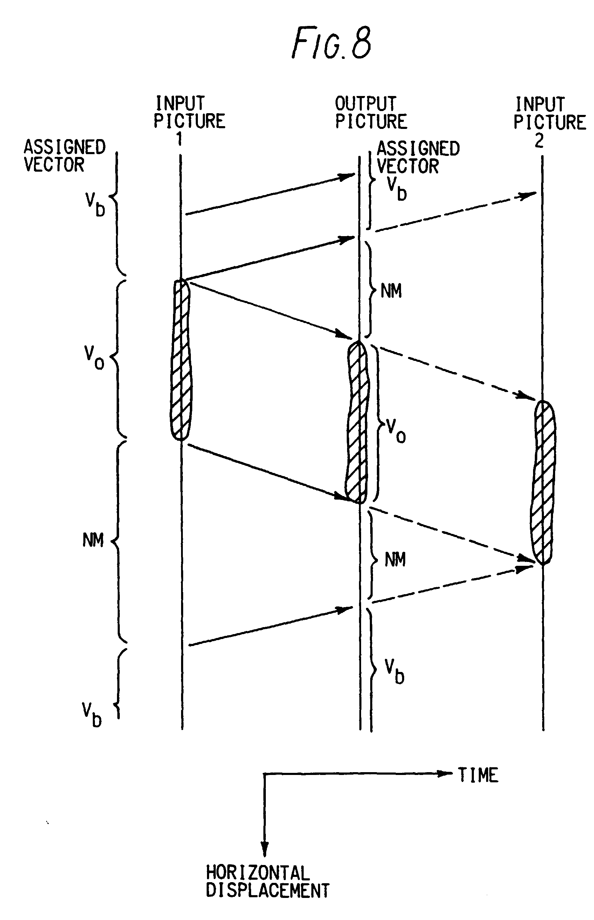

To convert vectors from the instant of an input picture to an output picture at a different instant in time the input vectors can be projected forward in time (allowing for their motion). When projecting vectors forward in time it is appropriate to use forward assignment only (as described above). This process is illustrated in Figure 8. The foreground object (shown hashed) is moving down in the diagram, while the background is moving up. The vectors assigned to input picture 1 by forward assignment (Figure 2) are projected forward in time to the output picture instant.

Several problems are inherent in projecting vectors forward in time. While these problems are not insuperable the technique of combined forward and backward assignment is simpler and therefore more attractive. The first disadvantage of projecting vectors is that a new vector field must be generated for each output picture that is required. In contrast with combined forward and backward assignment the most recently available motion vectors need merely to be repeated. Projecting vectors forward in time can result in output pixels being assigned either none or multiple vectors. This can be due to the nature of the input picture, incorrectly measured vectors or because motion vectors may not project precisely onto output pixel sites. If an output pixel is assigned no vector the picture can be interpolated in a 'fallback' mode. Isolated pixels interpolated in this way give an undesirable 'grainy feel' to the interpolated output pictures. This can be overcome, at the expense of additional hardware, by median filtering the output vector field. If multiple vectors are assigned to the same output pixel the conflict must be resolved. This can be done, again at the expense of additional hardware, as described in the last-mentioned reference of Fernando and Parker.

While the apparatus has been described in terms of discrete hardware, it may in principle be implemented in whole or in part by means of a computer, in which case the hardware diagrams should be regarded as flow charts, as will be understood by those skilled in the art. It should also be appreciated that where the term "picture" has been used, this should be taken to comprise "frame" or "field" of the video signal, and not just an interlaced two-field picture.

## Claims

1. A method of assigning the appropriate one (if any) of a plurality of possible motion vectors to pixels of a video signal consisting of a series of pictures, the method comprising the steps of:
a backwards assignment operation in which a first input picture is shifted by each of a plurality of possible vectors and compared to a second, succeeding picture to determine assignment errors for each vector at each pixel;
a forward assignment operation in which the second picture is shifted by each of a plurality of possible vectors and compared to the first picture to determine assignment errors for each vector at each pixel; and
using for each pixel the assignment errors determined in both forward assignment and backwards assignment operations to determine whether any of the vectors is appropriate for that pixel.

2. A method according to claim 1, further comprising comparing the assignment errors for the forward and backwards assignment operations for a pixel to determine whether the pixel may relate to revealed or obscured background.

3. A method according to claim 1, in which the vectors used for the backwards assignment are the inverse of the vectors used for the forward assignment.

4. A method according to claim 1, further comprising generating an output picture from one of the input pictures by extrapolation using the motion vectors assigned to the pixels.

5. Apparatus for assigning the appropriate one (if any ) of a plurality of possible motion vectors (Vn) to pixels of a video signal consisting of a series of pictures, the apparatus comprising:
backwards assignment means (42) for shifting a first input picture by each of a plurality of possible motion vectors and comparing the resultant to a second succeeding picture to determine assignment errors for each vector at each pixel;
forward assignment means (42) for shifting the second picture by each of a plurality of possible motion vectors and comparing the resultant to the first picture to determine assignment errors for each vector as each pixel; and
vector determining means (44) operative for each pixel to determine from the assignment errors determined in both forward assignment and backwards assignment operations whether any of the vectors is appropriate for that pixel.

6. Apparatus according to claim 5, in which the vector determining means additionally compares the assignment errors for the forward and backwards assignment operations for a pixel to determine whether the pixel may relate to revealed or obscured background.

7. Apparatus according to claim 5, in which the vectors used in the backwards assignment means are the inverse of the vectors used in the forward assignment means.

8. Apparatus according to claim 5, further comprising means for generating an output picture from one of the input pictures by extrapolation using the motion vectors assignment to the pixels.

## Patentansprüche

1. Verfahren der Zuweisung der passenden bzw. geeigneten (wenn überhaupt) von einer Vielzahl von möglichen Bewegungsvektoren zu Pixeln eines Videosignals, das aus einer Reihe von Bildern besteht, wobei das Verfahren die Schritte aufweist:
eine Rückwärts-Zuweisungsoperation, in der ein erstes Eingangsbild durch jeden einer Vielzahl von möglichen Vektoren verschoben wird und mit einem zweiten, nachfolgenden Bild verglichen wird, um Zuweisungs-Fehler für jeden Fehler bei jedem Pixel zu bestimmen;
eine Vorwärts-Zuweisungsoperation, bei welcher das zweite Bild durch jeden einer Vielzahl von möglichen Vektoren verschoben wird und mit dem ersten Bild verglichen wird, um Zuweisungs-Fehler für jeden Vektor bei jedem Pixel zu bestimmen; und
ein Verwenden der Zuweisungs-Fehler für jeden Pixel, die sowohl in Vorwärts-Zuweisungs- als auch Rückwärts-Zuweisungs-Operationen bestimmt werden, um zu bestimmen, ob irgendeiner der Vektoren für jenen Pixel geeignet ist.

2. Verfahren nach Anspruch 1, das weiter das Vergleichen der Zuweisungs-Fehler für die Vorwärts- und Rückwärts-Zuweisungs-Operationen für einen Pixel aufweist, um zu bestimmen, ob der Pixel mit aufgedeckten oder verdeckten Hintergrund in Beziehung stehen kann.

3. Verfahren nach Anspruch 1, bei welchem die Vektoren, die für die Rückwärts-Zuweisung verwendet werden, das Inverse der Vektoren sind, die für die Vorwärts-Zuweisung verwendet werden.

4. Verfahren nach Anspruch 1, das weiter eine Erzeugung eines Ausgangsbildes von einem der Eingangsbilder durch Extrapolation umfaßt, wobei die Bewegungsvektoren, die den Pixeln zugewiesen sind, verwendet werden.

5. Apparat zum Zuweisen der geeigneten (wenn überhaupt) einer Vielzahl von möglichen Bewegungsvektoren (Vn) zu Pixeln eines Videosignals, das aus einer Reihe von Bildern besteht, wobei der Apparat aufweist:
eine Rückwärts-Zuweisungs-Einrichtung (42), um ein erstes Eingangsbild durch jeden einer Vielzahl von möglichen Bewegungsvektoren zu verschieben und um das Ergebnis bzw. die Resultierende mit einem zweiten nachfolgenden Bild zu vergleichen, um Zuweisungs-Fehler für jeden Vektor bei jedem Pixel zu bestimmen;
eine Vorwärts-Zuweisungs-Einrichtung (42), um das zweite Bild um jeden einer Vielzahl von möglichen Bewegungsvektoren zu verschieben und um die Resultierende mit dem ersten Bild zu vergleichen, um Zuweisungs-Fehler für jeden Vektor bei jedem Pixel zu bestimmen; und
eine Vektorbestimmungseinrichtung (44), die wirksam bzw. betriebsfähig für jeden Pixel ist, um aus den Zuweisungs-Fehlern, die sowohl in Vorwärts-Zuweisungs- als auch Rückwärts-Zuweisungs-Operationen bestimmt wurden, zu bestimmen, ob irgendeiner der Vektoren für jenen Pixel geeignet ist.

6. Apparat nach Anspruch 5, bei welchem die Vektorbestimmungseinrichtung zusätzlich die Zuweisungsfehler für die Vorwärts- und Rückwärts-Zuweisungs-Operationen für einen Pixel vergleicht, um zu bestimmen, ob der Pixel zu einem aufgedeckten oder verdeckten Hintergrund in Beziehung stehen kann.

7. Apparat nach Anspruch 5, bei welchem die Vektoren, die bei der Rückwärts-Zuweisung-Einrichtung verwendet werden, das Inverse der Vektoren sind, die bei der Vorwärts-Zuweisungseinrichtung verwendet werden.

8. Apparat nach Anspruch 5, der weiter eine Einrichtung zur Erzeugung eines Ausgangsbildes aus einem der Eingangsbilder durch Extrapolation aufweist, indem die Bewegungsvektoren-Zuweisung zu den Pixeln verwendet wird.

## Revendications

1. Méthode d'affectation du vecteur approprié (s'il existe) parmi une pluralité de vecteurs de mouvement possibles aux pixels d'un signal vidéo consistant en une série d'images, la méthode comprenant les étapes de :
une opération d'affectation arrière dans laquelle une première image d'entrée est décalée par chacun d'une pluralité de vecteurs possibles et comparée à une deuxième image suivante afin de déterminer les erreurs d'affectation pour chaque vecteur, à chaque pixel ;
une opération d'affectation avant dans laquelle la deuxième image est décalée par chacun d'une pluralité de vecteurs possibles et comparée à la première image afin de déterminer les erreurs d'affectation pour chaque vecteur, à chaque pixel ; et
l'utilisation, pour chaque pixel, des erreurs d'affectation déterminées à la fois dans les opérations d'affectation avant et d'affectation arrière, afin de déterminer si un quelconque des vecteurs est approprié pour ce pixel.

2. Méthode suivant la revendication 1, comprenant en outre la comparaison des erreurs d'affectation des opérations d'affectation avant et arrière pour un pixel, afin de déterminer si le pixel peut se rapporter à un arrière-plan révélé ou caché.

3. Méthode suivant la revendication 1, dans laquelle les vecteurs utilisés pour l'affectation arrière sont l'inverse des vecteurs utilisés pour l'affectation avant.

4. Méthode suivant la revendication 1, comprenant en outre la génération d'une image de sortie à partir d'une des images d'entrée, par extrapolation avec utilisation des vecteurs de mouvement affectés aux pixels.

5. Appareil pour affecter le vecteur approprié (s'il existe) parmi une pluralité de vecteurs de mouvement possibles (Vn) aux pixels d'un signal vidéo consistant en une série d'images, l'appareil comprenant :
des moyens d'affectation arrière (42) pour décaler une première image d'entrée d'une quantité égale à chacun d'une pluralité de vecteurs de mouvement possibles, et pour comparer le résultat à une deuxième image suivante afin de déterminer les erreurs d'affectation pour chaque vecteur, à chaque pixel ;
des moyens d'affectation avant (42) pour décaler la deuxième image d'une quantité égale à chacun d'une pluralité de vecteurs de mouvement possibles et pour comparer l'image résultante à la première image afin de déterminer les erreurs d'affectation pour chaque vecteur, à chaque pixel ; et
des moyens de détermination de vecteur (44) agissant, pour chaque pixel, afin de déterminer, à partir des erreurs d'affectation déterminées à la fois dans les opérations d'affectation avant et d'affectation arrière, si un quelconque des vecteurs est approprié pour ce pixel.

6. Appareil suivant la revendication 5, dans lequel les moyens de détermination de vecteur comparent en outre les erreurs d'affectation pour les opérations d'affectation avant et d'affectation arrière pour un pixel, afin de déterminer si le pixel peut concerner un arrière-plan révélé ou caché.

7. Appareil suivant la revendication 5, dans lequel les vecteurs utilisés dans les moyens d'affectation arrière sont l'inverse des vecteurs utilisés dans les moyens d'affectation avant.

8. Appareil suivant la revendication 5, comprenant en outre des moyens de génération d'une image de sortie à partir d'une des images d'entrée, par extrapolation avec utilisation de l'affectation des vecteurs de mouvement aux pixels.
